(19) **Europäisches Patentamt**
**European Patent Office**
**Office européen des brevets**

(11) **EP 1 847 811 B1**

(12) **EUROPEAN PATENT SPECIFICATION**

(45) Date of publication and mention
of the grant of the patent:
**03.11.2010 Bulletin 2010/44**

(51) Int Cl.:
**G01D 5/26** (2006.01)   **G01D 5/353** (2006.01)

(21) Application number: **06008340.9**

(22) Date of filing: **21.04.2006**

(54) **A system and method for measuring distances, displacements and mechanical actions**

System und Verfahren zum Messen von Distanzen, Verschiebungen und mechanischen Einwirkungen

Système et procédé de mesure de distances, de déplacements et d'actions mécaniques

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**24.10.2007 Bulletin 2007/43**

(73) Proprietors:
• **Fondazione Torino Wireless**
**10129 Torino (IT)**
• **Istituto Superiore Mario Boella**
**10129 Torino (IT)**
• **POLITECNICO DI TORINO**
**10129 Torino (IT)**

(72) Inventors:
• **Vallan, Alberto**
**13899 Pralungo (BI) (IT)**

• **Abrate, Silvio**
**12038 Savigliano (CN) (IT)**
• **Perrone, Guido**
**13842 Pavignano (BI) (IT)**

(74) Representative: **Grünecker, Kinkeldey, Stockmair & Schwanhäusser Anwaltssozietät Leopoldstrasse 4 80802 München (DE)**

(56) References cited:
**EP-A- 0 346 589    EP-A- 1 152 259
EP-A- 1 496 373    DE-A1- 4 303 804
US-A- 4 274 736**

Printed by Jouve, 75001 PARIS (FR)

**Description**

FIELD OF THE PRESENT INVENTION

The present invention relates to the measurement of distances, displacements and forces. In particular, the present invention relates to the measurement of displacements caused by mechanical forces, such as, for example, tractions or compressions and the relative forces producing said displacements. In more detail, the present invention relates to the measurement of displacements and forces by using optical transducers. Still in more detail, the present invention relates to the measurement of displacements and forces by using optical transducers and/or sensors comprising low cost optical fiber components. Finally, the present invention relates to a method, a device and a system for measuring distances, displacements and forces, with said device and system comprising low cost optical transducers and/or sensors.

DESCRIPTION OF THE PRIOR ART

During the last years, much development work has been devoted to the provision of devices adapted to measure and/or detect mechanical forces and displacements in a very reliable manner. Along the devices and systems developed and proposed, systems and devices based on very sophisticated electronic assemblies became the most largely used devices and systems. This, in particular, was due to the fact that the development in the sector of integrated circuits and the corresponding reduction in size of circuits exploiting very complicated functions, allowed the provision of very small electronic transducers, adapted to be used for different purposes and under very difficult conditions. For instance, electronic transducers are known, the size of which is kept less than a few cubic millimeters. Moreover, the last developments in the field of the computing means, in particular, in the field of the software adapted for elaborating very big quantities of data in an always shorter time, allowed the data detected by the electronic transducers to be elaborated in an automatic and reliable manner. Finally, the decreasing costs of electronic systems, allowed containing the costs for producing electronic transducers, thus allowing said electronic transducers to be used for several purposes and applications.

However, in spite of all the advantages cited above offered by electronic transducers, said electronic transducers are not free from drawbacks. The most relevant drawback affecting electronic transducers arises from the fact that electrical current is needed for operating the electronic transducers. It is appreciated that in the case of force acting on an electronic transducer, the electrical current flowing through the transducer is influenced by the force acting on it, so that the variations in the current flow may be detected and used for obtaining an indication of the intensity of the force acting on the transducer. However, the electrical current flowing through the electronic transducers may also be influenced by the external environment, thus rendering electronic transducers less reliable for applications in critical environments, such as in structures exposed to electrostatic discharges during thunderstorms or in electromagnetically noisy industrial premises. Moreover, it may become difficult or risky to use electronic transducers in storage areas of highly flammable materials. Finally, some electronic transducers are also not suitable for biomedical applications because the risk of electrocution may arise.

Accordingly, in view of the problems explained above, it would be desirable to provide a technology that may solve or reduce these problems. In particular, it would be desirable to provide transducers suitable to be used in structures exposed to electrostatic discharges and/or in noisy industrial premises, or even in storage areas of highly flammable materials. In the same way, it would be desirable to provide transducers for measuring and/or detecting forces, suitable to be used for biomedical applications. Furthermore, it would be desirable to provide transducers characterized by low cost, light weight, reduced size and minimal invasiveness. It would also be desirable to provide transducers for the purpose of reliably measuring forces and displacements, allowing to be used in combination with low cost, simple and well-known equipments.

Some attempts have been made in the last years for overcoming the drawbacks affecting electronic forces measurement systems. In particular, in the last years, some efforts have been devoted to the development of optical transducers to measure forces and the displacements they cause. Many of these optical transducers are based on the consideration that forces may be measured and/or detected using evaluations of the effects on light transmitted through an optical path caused by forces acting, either directly or indirectly on said optical path. In particular, the working principle of many optical transducers is based on the variation in the photocurrent detected at the output of an optical path as a consequence of a variation in the link attenuation due to the force under test. In fact, it has been observed that a relationship may be established between the photocurrent detected at the output of an optical path with the mechanical stress acting on said mechanical path. Unfortunately, however, also the known optical transducers are not free from drawbacks and some of them are also not as reliable as desired. Finally, assembling and manufacturing many of the known optical transducers is quite cumbersome and, therefore, quite expensive.

Examples of prior art optical transducers can be found in each of documents US-B-6236 488 and EP-A-1 152 259.

A device for modifying the length of the transmission path of electromagnetic waves in known from document

**EP 1 847 811 B1**

EP1274680.

It would therefore be desirable to provide optical transducers allowing to overcome the drawbacks effecting prior art optical transducers such as, for instance, reduced reliability, reduced application range, and high costs, while maintaining a satisfactory sensitivity.

SUMMARY OF THE PRESENT INVENTION

In general, the present invention is based on the consideration that forces, in particular, mechanical forces and/or actions such as tractions and/or compressions may be detected and/or measured using the variations of light through an optical path caused by said mechanical actions acting, either directly or indirectly, on said optical path. In particular, the working principle of the present invention is based on the consideration that the variation in length of an optical path due to a mechanical force acting on said mechanical path causes the phase of an optical signal transmitted through said optical path being shifted and/or modified so that, if said optical signal, when exiting said optical path, is converted into an electrical signal, the variation in length of the optical path results in the phase of said electrical signal being also shifted and/or modified, thus differing from the phase this electrical signal would have had in the absence of any mechanical action acting on it. Accordingly, if a second path is used, say a reference path, with said second path being adapted to emit a reference electrical signal and being not subjected to the mechanical actions acting on the optical path (the sensing path), the electrical signal exiting the sensing optical path will have a phase differing from that of the electrical signal exiting the reference path, with said difference being related to the variation in length caused by a mechanical action acting on the sensing optical path. Accordingly, by comparing the phases of the signals at the output of the sensing and reference paths, it is possible to determine the variation in the sensing path length and to relate this variation to the mechanical action acting on the sensing optical path. Although this detection approach may appear to be quite general in principle, it has been revealed to be very reliable for the purpose of detecting and/or measuring forces, in particular, mechanical forces, such as, for example, tractions or compressions. Moreover, this detection approach allows the implementation of components suitable to improve the resolution, the sensitivity, the accuracy and reliability of the measures. Moreover, when fibers, such as, for instance, polymer optical fibers (POF) are used for the purpose of realizing the sensing optical path, further advantages arise in terms of costs, besides the advantages common to the other types of optical fibers such as, for instance, lightweight, minimal invasiveness, immunity to electromagnetic interferences and impossibility to start a fire or an explosion. Finally, further advantages also arise due to the less demanding mechanical tolerances and the possibility to use low cost sources and photo detectors. A detecting and/or measuring approach according to the present invention can be used in the case of critical environments such as in electromagnetically noisy industrial premises, in storage areas of highly flammable materials, in structures exposed to electrostatic discharges during thunderstorms and in the monitoring of monuments or art pieces in general. The absence of electrical currents flowing through the sensing area of the sensor according to the present invention makes this transducer also ideal for biomedical applications avoiding the risk of electrocution. It is also possible to control several sensing points or areas (and the corresponding transducers) simultaneously, by means of complex yet quite inexpensive networks of sensors according to the present invention. Moreover, if a suitable software is used, it is also possible to control the sensors via web using standard protocols such as, for instance, the TCP/IP protocol.

It has also to be appreciated that the detecting approach according to the present invention (and, accordingly, the detecting transducers according to the present invention), contrary to some prior art optical transducers, does not require optical fibers to be interrupted (such as, for instance, in the case of optical transducers based on the reflection and/or absorbance of light) so that the whole transducers and detecting means and/or devices according to the present invention can be better isolated from dust, rain or the like, thus rendering the detecting transducers and/or devices according to the present invention particularly suitable for outdoor applications.

On the basis of the considerations as stated above, an optical transducer adapted to detect external mechanical actions acting on said transducer is disclosed said transducer comprising at least one sensing optical path adapted to transmit at least one sensing optical signal and to emit at least one sensing output electrical signal and at least one reference path adapted to emit at least one output electrical reference signal. Moreover, at least one portion of said at least one optical path is adapted to be exposed to external mechanical actions, so that the transmission of said sensing optical signal through said sensing optical path can be modified, resulting in a phase shift between said sensing electrical signal and said reference electrical signal being generated.

In particular, a first embodiment of the present invention relates to an optical transducer as claimed in claim 1.

Further embodiments of the present invention are defined in the dependent claims.

In the following it will be disclosed a measuring method comprising measuring the phase shift between said output electrical sensing signal and said at least one output electrical reference signal in absence of any mechanical action acting on said at least one portion of said at least one optical sensing path.

3

BRIEF DESCRIPTION OF THE DRAWINGS

Further advantages, objects and features as well as embodiments of the present invention are defined in the appended claims and will become more apparent with the following detailed description when taken with reference to the accompanying drawings, in which like features and/or component parts are identified by like reference numerals. In particular, in the drawings:

figure 1 relates to a schematic view of an optical transducer and a measuring device according to a first embodiment of the present invention;

figure 2 relates to a schematic view of a second embodiment of an optical transducer and a measuring device according to the present invention;

figure 3 relates to a schematic view of measuring means adapted to be used in combination with an optical transducer according to the present invention and adapted to be implemented in a measuring device according to the present invention;

figure 4 schematically depicts the dependence of the output signal of the optical transducer and the measuring device according to the present invention from the phase difference $\delta$ between the sensing signal and the reference signal;

figure 5 schematically depicts a further embodiment of an optical transducer and a measuring device according to the present invention;

figure 6 relates to a schematic view of a further embodiment of an optical transducer and a measuring device according to the present invention;

figure 7 schematically depicts a further embodiment of an optical transducer and a measuring device according to the present invention;

figure 8 relates to a schematic view of a further embodiment of an optical transducer and a measuring device according to the present invention;

figure 9 schematically depicts an embodiment of a measuring device according to the present invention implementing a plurality of optical transducers and allowing, therefore, to detect a plurality of mechanical actions acting on a corresponding plurality of sensing areas.

DETAILED DESCRIPTION

While the present invention is described with reference to the embodiments as illustrated in both the following detailed description and the drawings, it should be understood that the following detailed description, as well as the drawings, are not intended to limit the present invention to the particular illustrative embodiments disclosed, but rather the described illustrative embodiments merely exemplify the various aspects of the present invention, the scope of which is defined by the appended claims.

The present invention is understood to be of particular advantage when used for detecting and/or measuring mechanical actions such as, for example, traction and/or compressions. For this reason, examples will be given in the following in which corresponding embodiments of the optical transducer and the measuring device according to the present invention are used for detecting both tractions and compressions as well as displacements caused by said tractions and/or compressions. However, it has to be noted that the use of the optical transducers according to the present invention is not limited to the detection and/or measurement of tractions and compressions and the resulting displacements; on the contrary, the optical transducer and the measuring device according to the present invention may also be used for the purpose of measuring and/or detecting different forces as well as distances. The present invention is, therefore, also useful for the measurement of all these forces, mechanical actions, distances and displacements, and the forces, displacement and distances described in the following are to represent any force, distance and displacement.

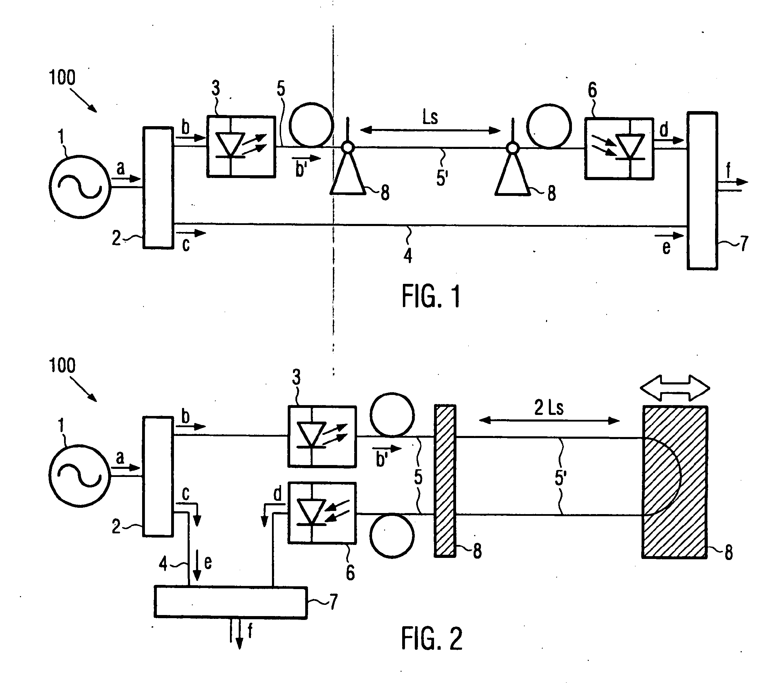

The first embodiment of an optical transducer and a measuring device according to the present invention will be described in the following with reference to figure 1.

In figure 1 reference 100 identifies a measuring device equipped with an optical transducer according to the present invention. Still in figure 1, reference numerals 5 and 4 identify a first and second path, respectively, in the following also referred to as sensing path and reference path, respectively. The sensing path 5 comprises an optical path adapted to transmit an optical sensing signal b' and to emit an output reference signal d; to this end, means 6 are provided, adapted to receive the optical signal b' entering the optical path 5 and to convert the optical signal b' into an electrical signal d. Reference numeral 8 identifies two fixing means fixed to the optical path 5 so as to define a portion 5' of said optical path 5 of a predefined length Ls. The fixing means or locks 8 are used to fix the sensing portion 5' of the optical path 5 to a region whose displacement has to be monitored; in particular, the sensing portion 5' is adapted to be exposed to a mechanical action resulting in the length Ls of said sensing portion 5' being modified. By way of example, these mechanical actions may comprise traction or compression forces. Still in figure 1, reference numeral 1 identifies generating means adapted to generate an electrical signal, for instance a RF signal a. Moreover, reference numeral 2 identifies dividing means adapted to divide (not necessarily in an even way) the electrical signal a into two corresponding electrical signals b and c entering the sensing paths and the reference path 4, respectively. Finally, reference e identifies an electrical signal exiting the reference path 4, whilst reference numeral 7 identifies measuring means adapted to measure the phase difference or shift between the electrical signals d and e, with said measuring means 7 being adapted to receive the electrical signals d and e and to emit a signal f. Moreover, reference numeral 3 identifies light emitting means adapted to receive the electrical signal b and to convert said electrical signal b into a corresponding optical signal b'.

The working principle of the embodiment of the present invention depicted in figure 1 is based on the measure of the variation in the phase difference between the two signals d and e, due to a variation in the path length (in particular, in the length Ls of the sensing portion 5') traveled by the optical signal b' and can be summarized as follows.

The signal generating means 1 produces a RF signal a at a frequency f, to be determined on the basis of general considerations such as, for instance, the trade-off between costs and performances. In general, the higher the frequency used, the better is the resolution of the deformation measured although ambiguity problems may arise with large displacements; accordingly, in the case of coarse or relevant displacements, lower frequencies may be preferred. Alternatively, it is also possible to use a frequency-variable generator, allowing to make measures both at a frequency low enough to avoid ambiguities and at a frequency high enough to obtain the achieved resolution. The RF signal generated by the generating means 1 is divided into two sub signals b and c (not necessarily in an even way) by the dividing means 2. One output of the power divider 2 feeds the light emitting means 3 while the other output is connected to the reference path 4 so that the signals b and c enter the optical emitting means 3 and the reference path 4, respectively. For instance, the light emitting means 3 may comprise a LED, a laser diode or the like. The signal b is converted by the light emitting means 3 into a corresponding optical signal b' which enters the sensing optical path 5, in particular, the sensing portion 5' of the optical path 5. The optical signal b' is transmitted through the sensing portion 5' of the optical path 5 and enters subsequently the optical receiving means 6 where said optical signal b' is converted into a corresponding electrical signal d. At the outputs of both the optical sensing path 5 and the reference path 4, the corresponding signals d and e are collected by the measuring means 7 adapted to measure or determine the difference in phase between the signals d and e. To this end, the measuring means 7 are adapted to emit a signal f which is subsequently collected by computing means (not depicted in figure 1); for instance, said computing means may comprise a digital acquisition (DAQ) card adapted to convert the electrical signal f into a digital signal and a computing unit such as, for instance, a PC equipped with software adapted to analyze the data exiting the measuring means 7.

Different optical fibers may be used for the purpose of realizing the sensing optical path 5; for instance, depending on the circumstances, polymer optical fibers (POF) can be used or, alternatively silicate fibers. The optical receiving means 6 may comprise photodiodes followed by a low noise amplifier. The reference arm 4 can be realized by any means suitable to connect the power divider 2 with the phase-meter 7. Typically, the reference path comprises a coaxial cable or a microstrip circuit but it can also comprise, for example, another optical fiber. In this case, the reference path 4 will comprise optical emitting means adapted to receive the electrical reference signal c and to convert said electrical reference signal c into a corresponding optical reference signal, as well as optical receiving means adapted to receive said optical reference signal and to convert said optical reference signal into the electrical reference signal e.

Considering now a sinusoidal generator 1, the RF signal emitted by said generator 1 can be described by

$$a(t) = A \cos(\omega t) \qquad (1)$$

being A a constant.

Assuming an ideal behavior for the power divider 2, the signals b and c emitted by said power divider 2 can be described, respectively, by

$$b(t) = B \cos(\omega t) \qquad c(t) = C \cos(\omega t) \qquad (2)$$

where the constants B and C are related to A by the splitting ratio of the power divider 2. Accordingly, the signals d and e entering the measuring means 7 (the phase-meter) can be described by

$$d(t) = D \cos(\omega t + \phi) \quad e(t) = E \cos(\omega t + \theta) \quad (3)$$

being the constants D and E related to B and C by the attenuations of the sensing path 5 and the reference path 4, respectively. The phase shifts $\phi$ and $\theta$ in equation (3) depend on the propagation velocity v of the signals in the sensing and in the reference paths and on their lengths as well as on the phase delay introduced by any device along the path.

It appears, therefore, clearly from equation (3) that a variation in the length of the sensing path 5 (in particular, in the length of the sensing portion 5') due to an external mechanical action such as, for instance, a traction or a compression, will produce a variation of $\phi$ and, therefore, a variation of $\delta$ ($\phi$- $\theta$), and, in turn, a variation of the output signal f exiting the phase-meter.

Accordingly, if the natural phase shift of the optical transducer and the measuring device depicted in figure 1 is detected, namely the phase difference or shift between the two signals d and e in the absence of any mechanical action acting on the optical path (on the sensing portion 5' of the optical path 5) any mechanical action acting on the optical path 5 (on the sensing portion 5' of the optical path 5) and resulting in a variation of the length of the optical path 5 (in the length Ls of the sensing portion 5' of the optical path) will also produce a variation of the value of the phase shift $\delta$ between the sensing electrical signal d and the reference electrical signal e; accordingly, detecting said variation of the phase difference $\delta$ allows to detect the mechanical actions acting on the optical path as well as any displacements such as, for instance, displacements of the fixing means or block 8. For example, for the purpose of measuring the elongation of a steel or concrete beam, the sensing portion 5' will be fixed directly throughout its whole length of the beam using suitable type of glue. On the contrary, in those applications in which the distance between two reference points has to be measured, the opposed end portions of the portion 5' will be fixed to these reference points. In the same way, in other applications in which it is necessary to measure the strain in short predefined regions only, the optical path will be made of fibers kept loose within a protective sleeve and only the portion corresponding to the predefined regions will be somehow glued.

It appears clearly from the description given above that the resolution of the optical transducer and the corresponding measuring device depicted in figure 1 is related to the dependence of the variation of the difference in phase $\delta$ on the variation in length of the sensing portion 5' generated by a mechanical action acting on said motion 5'. That is to say, that if small variation in lengths correspond to relevant variation in the phase shift $\delta$, also light mechanical actions producing small variations in the length of the sensing portion 5' can be detected; on the contrary, if only big or relevant variation in length of the sensing portion 5' produce relevant variations in the phase shift $\delta$ between the two signals d and e, only relevant mechanical actions producing relevant variations in length may be detected, accordingly. In other words, the sensitivity of the optical transducer and the measuring device depicted in figure 1 depends on the relationship between the variation in length of optical path 5 (of the sensing portion 5') and the corresponding variation in the phase shift $\delta$.

In the following, a further embodiment of an optical transducer and a measuring device according to the present invention and offering improved sensitivity will be described with reference to figure 2, where like features and/or component parts already described with reference to figure 1 are identified by like reference numerals.

The embodiment of the present invention depicted in figure 2 is substantially similar to that depicted in figure 1 and described above but differs from the embodiment of figure 1 in that the sensing portion 5' has a length corresponding to twice the length Ls of the sensing portion 5' of the embodiment depicted in figure 1. In particular, as apparent from figure 2, this is obtained by providing an optical path 5 comprising two rectilinear portions joined by a curved portion. Accordingly, if the fixing means 8 are disposed as depicted in figure 2, namely so as to be fixed to the opposed end portions of said two sensing portions 5', it appears clearly that a mechanical action acting on the transducer (on both these two sensing portions 5') will produce a variation in length of each sensing portion 5', resulting in a total variation in length of the optical path 5 more relevant than the variation in length the same mechanical action would have produced on the sensing portion 5' of the optical transducer depicted in figure 1. In particular, the variation in length produced by a mechanical action acting on both the two rectilinear sensing portions 5' of the transducer of figure 2 may produce a total variation in length of these two sensing portions 5' corresponding to twice or more the variation in length the same mechanical action would have produced on the sensing portion 5' of the transducer of figure 1. It results, therefore, that in the case of the optical transducer of figure 2, even light mechanical actions will result in a variation of the phase difference between the two signals d and e being relevant enough to be detected and measured by the measuring means (the phase-meter) 7. Moreover, the setup described in figure 2 simplifies the power supply distribution since it has the practical advantage of having all the optoelectronic and electrical devices on the same side.

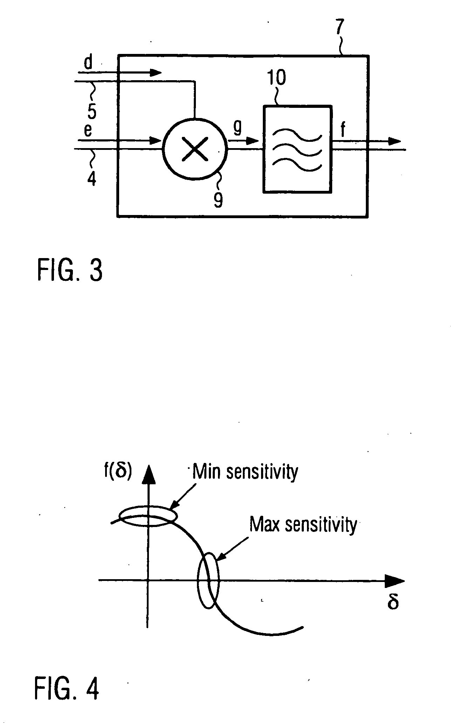

In the following, an example of measuring means adapted to be used in combination with the optical transducer according of the present invention and adapted to be implemented in the measuring device according to the present invention will be described with reference to figure 3, wherein, as usual, like features and/or component parts are identified by like reference numerals.

In figure 3, reference numeral 9 identifies mixing means whilst reference numeral 10 identifies a low-pass filter. The mixing means 9 (in the following also referred to as mixer) are adapted to receive the output sensing electrical signal d exiting the sensing path 5 and the output reference electrical signal e exiting the reference path 4. The mixer 9 can be of any type, namely either passive or active. Alternatively, according to the circumstances, analogical multipliers can be used for the purpose of mixing the two signals d and e. It has however to be understood that, in the light of the present invention, mixing the signals d and e means receiving said signals d and e and emitting a signal g which subsequently enters the low-pas filter 10, from which a further output signal f is emitted. The way the variation in the phase shift between the signals d and e maybe detected by the measuring means 7 of figure 3 can be summarized as follows.

The signals d and e depicted in figure 3 have the same expressions already written above. Assuming an ideal behavior for the mixer 9, the signal g exiting said mixer 9 may be described by

$$g(t) = D \cos(\omega t + \phi) \cdot E \cos(\omega t + \theta) = \tfrac{1}{2} \cdot D \cdot E \cdot [\cos(2\omega t + \phi + \theta) + \cos(\phi - \theta)] \quad (4)$$

so that, if the low-pass filter 10 has an ideal behavior, the signal f exiting said low-pass filter 10 may be described by

$$f(t) = \tfrac{1}{2} \cdot D \cdot E \cdot \cos(\phi - \theta) = k \cos(\delta) \quad (5)$$

where $\delta$ is equal to $\phi - \theta$ *and k is proportional to the signal amplitudes.* This clearly shows that the signal exiting the measuring means 7 is proportional to the phase difference or shift $\delta$ which, in turn, depends on the lengths of the sensing and reference paths, although with a non-linear dependence.

At the beginning of the measurement session, and in absence of any mechanical action on the transducer, the value of f is recorded, say $f_z$. Accordingly, if a mechanical action is applied to the transducer, for instance a traction or compression acting on the sensing portion 5' of the optical path 5, the value of f changes, thus allowing the measurement of the displacement which can be then described by

$$f - f_z \propto \Delta L_s.$$

It results, therefore, that if the signal f is collected, the variations of said signal f may be put into relationship with the variation in length of the sensing portion 5' of the optical path 5 and, in turn, with the mechanical action acting on the transducer. To this end, the signal f is sent to computing means, for instance to a personal computer (typically through a DAQ card) for the elaboration of the signals and the recovery of the amplitude of the mechanical action from the phase variation information.

Since the phase variation is proportional also to $\omega$, a resolution in the displacement in the order of tenth of micrometers requires the usage of frequencies in the GHz range, while a resolution of tenth of millimeter is possible using a frequency of few MHz.

Despite all the previously described advantages, the optical transducers and the measuring devices depicted in figures 1 and 2 are not completely free from drawbacks. In particular, the first drawbacks affecting the optical transducers and the measuring devices of figures 1 and 2 relates to the fact that the sensitivity of both the optical transducer and the measuring device depends on the value of $\delta$ in absence of any mechanical action acting on the transducer, i.e. on the phase difference between the signals d and e entering the measuring means 7. This in particular appears clearly from figure 4 where there is depicted the relationship between the signal f exiting the measuring means 7 (in particular, the low-pass filter 10) and the variation in the phase difference $\delta$ between the signals d and e entering the measuring means 7 (in particular, the mixer 9) of figure 3. In fact, as apparent from figure 4, since the relationship between the signal f and $\delta$ may be represented as a cosine, if the value of $\delta$ in absence of any mechanical action approximately corresponds to 0, the "working point" of the transducer will be located in the region of minor sensitivity depicted in figure 4, so that variations of $\delta$ in the range of $\pm 30°$ will result in small variations of the output signal f, so that it will be difficult to appreciate and/or to recover the mechanical action to which these variations of $\delta$ are due. On the contrary, if the phase shift between the two signals d and e in absence of any mechanical action acting on the transducer substantially corresponds to 90°, the "working point" of the transducer will be located in the region of more sensitivity depicted in figure 4, so that even small variations of δ due to less relevant actions acting on the transducer will result in a relevant variation of the output f, thus allowing said variation of δ to be detected and the corresponding variation in length of the sensing portion 5' or even the mechanical action to be recovered.

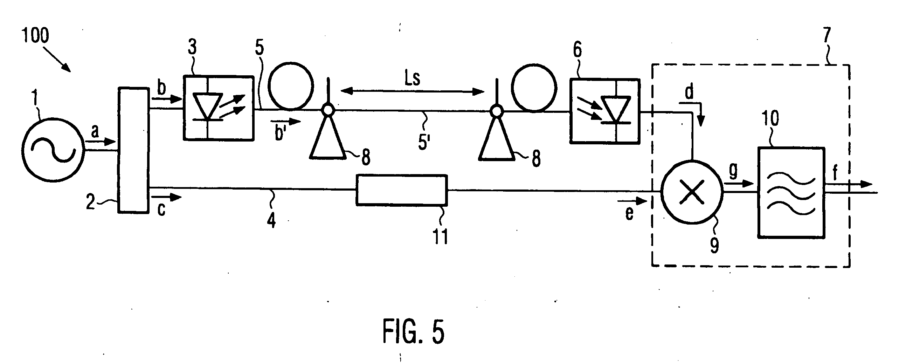

An example of a further embodiment of an optical transducer and a measuring device adapted to keep the "working point" of the transducer centered at approximately 90° will be described in the following with reference to figure 5, wherein, as usual, like features or component parts already described with reference to previous figures are identified by like reference numerals.

The optical transducer and the measuring device of figure 5 additionally comprise a phase shifter 11. In particular, said phase shifter 11, in the example depicted in figure 5 is added to the reference path 4; however, according to the circumstances, said phase shifter 11 could also be added to the sensing optical path 5. The purpose of the phase shifter 11 is that of adjusting, in the absence of any mechanical action acting on the transducer (on the sensing portion 5') the phase difference δ between the sensing electrical signal d and the reference electrical signal e so as to maintain said phase difference δ approximately corresponding to 90°. In this way, as apparent from figure 4, the working point of the transducer is kept in the region of maximum sensitivity, namely in the region centered to approximately 90°. The simple solution depicted in figure 5 allows to drastically improve the sensitivity of the transducer and the measuring device according to the present invention so that even less relevant mechanical actions such as, for instance, tractions or compressions or given small displacement may be detected and measured.

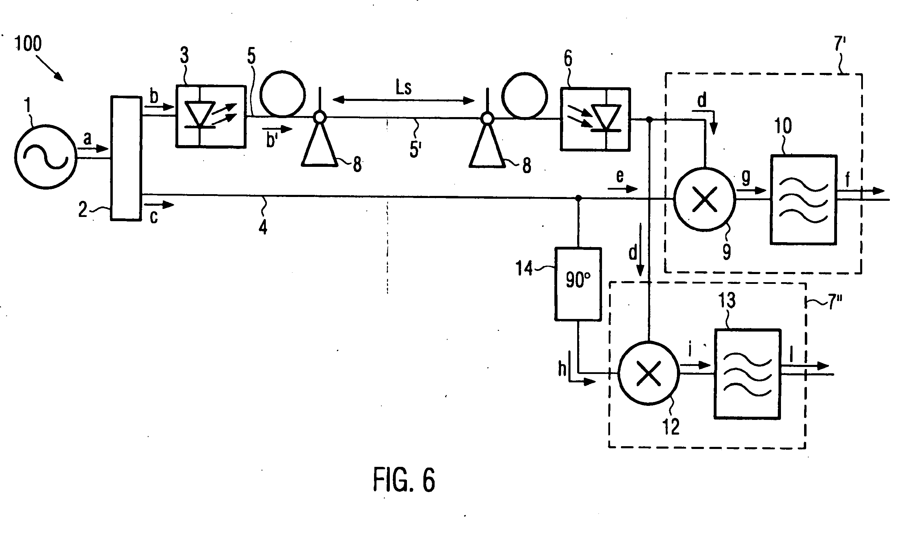

A further drawback affecting the embodiments of the present invention described above with reference to figures 1 to 5 relates to the fact that, as apparent from equation (5), the output of the low-pass band filter 10 not only depends on the phase difference between the two signals d and e but also on the amplitude of these two signals. This implies that any variation in the received power (in the power of one or both of the two signals d and e) entering the phase meter 7 and not due to a mechanical action acting on the transducer but for instance, to a variation of the optical attenuation in the optical path or of the electrical attenuation in the reference path 4 will be indistinguishable from a variation in the relative path lengths. In other words, it will not be possible to appreciate whether a variation in the output f exiting the measuring means 7 is really due to a variation in the phase difference between the signals d and e (resulting from a mechanical action acting on the transducer) or on a different reason generating a variation in the input power of one or both of the 2 signals d and e. Accordingly, a further embodiment of an optical transducer and a measuring device according to the present invention and adapted to overcome or at least to minimize this further drawback will be described in the following with reference to figure 6 wherein, as usual, like features and/or component parts already described above with reference to previous figures are identified by the same reference numerals.

In figure 6, reference numeral 14 identifies a phase shifter adapted to introduce a phase shift of the reference signal c exiting the power divider 2 of about 90°. However, the most important difference between the embodiment of figure 6 and the embodiments of figures 1, 2 and 5 relates to the fact that, in the embodiment of figure 6, two measuring means 7' and 7" of the kind depicted in figure 3 are used. In particular, the measuring means 7' comprise a first mixer 9 and a first low-pass band filter 10; the mixer 9 is adapted to collect the two signals d and e and to emit a corresponding signal g which is in turn collected by the low-pass band filter 10, from which a corresponding signal f is then emitted. The second measuring means 7" comprise a second mixer 12 adapted to collect the sensing signal d and a reference signal h exiting the phase-shifter 14, namely the reference signal c shifted of 90°. The signal i exiting the second mixer 12 enters the second low-pass band filter 13, from which the signal I is emitted.

The working principle of the embodiment depicted in figure 6 may be summarized as follows.

Supposing an ideal behavior for the phase shifter 14, the reference signal h exiting said phase-shifter 14 may be described by

$$h(t) = E \sin\left(\omega t + \theta\right) \quad (6)$$

so that the output signal i of the mixer 12 may be described by

$$i(t) = D \cos\left(\omega t + \phi\right) \cdot E \sin\left(\omega t + \theta\right) = \tfrac{1}{2} \cdot D \cdot E \cdot \left[\sin(2\omega t + \phi + \theta) - \sin\left(\phi - \theta\right)\right] \quad (7)$$

After the ideal low-pass band filter 13 the output signal I may be described by

$$I = \frac{1}{2} \cdot D \cdot E \cdot \left| \sin(\phi-\theta) \right| = k \sin(\delta) \quad (8).$$

Accordingly, when the sensitivity of one of the two measuring means 7' and 7" is at its minimum, the other is at the maximum and vice versa. In other words, the "working point" of at least one of the two measuring means 7' and 7" is always maintained in the region of maximum sensitivity depicted in, figure 4, namely in a region centered on about 90°. Moreover, the outputs f and I can be used also to avoid the dependence of the measure from the received power since the power can be estimated considering that

$$\sqrt{f^2 + I^2} = D \cdot E \cdot \sqrt{\cos^2 \delta + \sin^2 \delta} = D \cdot E \quad (8')$$

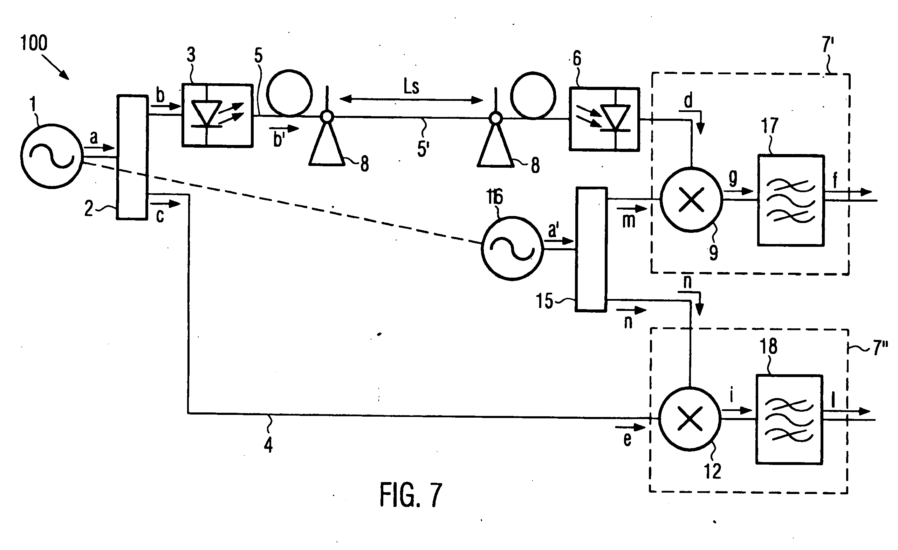

There is, however, a further drawback affecting the embodiments described above with reference to figures 1, 2, 5 and 6, namely the drawback related to the fact that the output of the measuring means 7, 7' and 7" (in particular, the output of the low-pass band filter 10 and 13) is a DC value, meaning that this output is sensitive to the offsets introduced into the various stages composing the optical transducer and the measuring device. Accordingly, with the embodiments depicted in figures 1, 2, 5 and 6, it may become difficult to appreciate whether a variation in one of the output signals f and I is due to a variation in the phase difference between either the entering signals d and e or the entering signals d and h due to a mechanical action acting on the transducer, or whether the variation as detected in one of the output signals f and I is rather due to a variation in the phase difference between either the signals d and e or the signals d and h which is however not due to any mechanical action acting on the transducer but for instance to an offset introduced by one of the stages composing the set up. Accordingly, a further embodiment of a transducer and a measuring device according to the present invention and allowing to overcome both this further drawback and the other drawbacks mentioned above will be described in the following with reference to figure 7, wherein, again, like features and/or component parts already described above with reference to previous figures are identified by like reference numerals.

The most important difference between the embodiment depicted in figure 7 and those described above with reference to previous figures relates to the fact that the embodiment of figure 7 additionally comprises second generating means (a second signal generator 16 and a second power divider 15); the signal a' generated by the second generator 16 enters the power divider 15 from which two signals m and n are output. The signal m, together with the sensing electrical signal d enters the first measuring means 7' comprising a first mixer 9 and a first band-pass filter 17 centered at a frequency $f_0$. In the same way, the second signal n and the reference electrical signal e enter the second measuring means 7" comprising a second mixer 12 and a second band-pass filter 18 centered at the same frequency $f_0$.

The purpose of the embodiment depicted in figure 7 is always that of sensing and/or detecting a mechanical action or a displacement or a force acting on the transducer through a variation in the paths followed by the sensing signal d(t) and the reference signal e(t); however, in the present case, the variation in the paths followed by the two signals d and e is not seen as a variation of the phase shift between said two signals d and e but as the time delay between them. Moreover, to improve the resolution, this time delay is not measured directly between the two signals d and e but between two signals f(t) and I(t) exiting the first measuring means 7' and the second measuring means 7", respectively.

The first generating means 1 (the first generator) generates a signal a at a frequency $f_1$, whilst the second generating means 16 (the second generator) generates a signal a' at a frequency $f_2$ that differs from the frequency $f_1$ by a small quantity $f_0$. The second generator 16 is locked to the first generator 1 to ensure that the frequency difference $f_0$ is kept substantially constant. Accordingly, either

$$f_2 = f_1 + f_0 \text{ or } f_2 = f_1 - f_0 \text{ with } f_0 \ll f_1 \quad (10).$$

The signal a exiting the oscillator 1 is split by the power divider 2 into two signals b and c, wherein the signal b fits the optical emitting means 3, while the signal c acts as the reference signal and is connected directly to the measuring means 7"; in particular, as depicted in figure 7, the reference signal e enters the second mixing means 12 together with signal n, namely together with a fraction of the signal a' coming from the second generator 16 through the second power divider 15. In the same way, the sensing electrical signal d exiting the optical path 5 comprising the optical generating means 3, the sensing portion 5' and the electrical generating means 6, is entered into the first mixing means 9 together with the signal m, namely with a fraction of the signal a' generated by the second generator 16.

Considering sinusoidal RF signals, the signals entering the mixer 9 can be written as

$$d(t) = D \cos(\omega_1 t + \phi)$$
$$m(t) = M \cos(\omega_2 t) \qquad\qquad (11)$$

being D and M constants that take into account the attenuations along the respective paths and $\phi$ the relative phase shift of the signal d(t) with aspect to the signal m(t). The signal g(t) exiting the first mixer 9 enters a band-pass filter 17 centered at a frequency $f_0$. In particular, it is important to note that, in the embodiments described above with reference to previous figures, a low-pass band filter was used, whilst in the present case, a band-pass filter centered at a frequency $f_0$ is used.

Assuming an ideal behavior of the components, the signal f exiting the band-pass filter 17 may be described by

$$f(t) = F \cos(\omega_0 t + \phi) \qquad\qquad (12)$$

that is, a signal having the same phase shift as the sensing signal d but at an angular frequency $\omega_0$, corresponding to the frequency $f_0$.

The same considerations as stated above also apply to the reference path 4; in fact, in this case, the signals e and n entering the second mixer 12 can be described by

$$e(t) = E \cos(\omega_1 t + \theta)$$
$$n(t) = N \cos(\omega_2 t) \qquad\qquad (13)$$

being E and N constants that take into account the attenuation along the paths and $\theta$ the phase shift of the signal e(t) with respect to the signal m(t) or the signal n(t).

Again assuming an ideal behavior, at the output of the band-pass filter 18 centered at the frequency $f_0$, the signal I exiting said band-pass filter 18 may be described by

$$I(t) = L \cos(\omega_0 t + \theta) \qquad\qquad (14)$$

That is, a signal having the same phase shift as the reference signal e but at angular frequency $\omega_0$.

It appears clearly from equations 11 and 13 and 12 and 14, respectively, that the signals f and I exiting the first band-pass filter 17 and the second band-pass filter 18, respectively, are sinusoidal signals that maintain the same phase shifts as the sensing signal d and the reference signal e, respectively; however, their frequency is changed from $f_1$ to $f_0$. Accordingly, the phase can now be easily measured with good accuracy because the operating frequency is low. Moreover, since the signals f and I are now AC signals (whilst in the previous embodiment the signals exiting the measuring means were DC signals), the signals f and I are no longer sensitive to any offset introduced by the various stages composing the setup. In other words, the embodiment of figure 7 allows to overcome the drawback affecting the embodiment depicted in figure 6.

Considering that the phases can also be written in terms of time delays, the phase difference $\delta$ can also be described by

$$\delta = \phi - \theta \; 2\pi \, f_1 \, \Delta t_1 = 2\pi \, f_0 \Rightarrow \Delta t_0 = \frac{f_1}{f_0} \, \Delta t_1 \qquad (15)$$

Equation (15) implies that the same phase difference $\delta$ at the frequency $f_0$ results in a time delay corresponding to $f_1 / f_0$ x the time delay at the frequency $f_1$. In other words, the same variation in the length of the sensing path 5 (in the length of the sensing portion 5') produces a much stronger effect on the signal $f(t)$ than on the signal $d(t)$. For example, considering standard POF both for the sensing and reference paths 5 and 4, $f_1$ = 20MHz and $f_0$ = 1 kHz, a length variation of 1cm produces a phase difference $\delta$ circa 0.36°, corresponding to a time delay of only 50ps at $f_1$ but of one microsecond at $f_0$.

According to the circumstances, the embodiment of figure 7 can be modified for the purpose of improving its reliability and/or its sensitivity. For example, a third oscillator (not depicted in figure 7) may be introduced, with said third oscillator being locked with the other two generators and working exactly at the frequency $f_0$. This third generator can be provided to generate a signal for a lock-in filter or other narrow band-filters (also not depicted in figure 7) that may be implemented either in hardware form or via software to recover the signals $f(t)$ and $I(t)$ in case of particularly noisy signals.

The measurement of the phase between signals $f(t)$ and $I(t)$ can be performed in several ways because the involved signals are low frequency signals. For example, this can be done by means of a PC connected to the circuit through a digitizing acquisition board. Then a user-friendly program can also be used to control the whole measurement procedure and compute the displacement. In this case the program should perform the operations described in the following.

- It acquires the signals $f(t)$ and $I(t)$.

- Optionally it acquires the reference signal at $f_0$ from the third generator.

- It reconstructs ideal noise-free signals from the acquired ones. If the third generator is used this may be done by recovering the signal parameters using a digital lock-in technique (i.e., a sort of synchronous detection) or other narrow-band filtering techniques, otherwise a three-parameter o four-parameter sine-fit may be used.

- It measures the time delay between the reconstructed noise-free signals and estimates the variation in length of the sensing fiber with respect to a previously stored measure taken as the zero value.

The whole procedure is repeated hundreds of times and the average value and standard deviation are computed to give the user an estimation of the confidence of the measurement process.

In all the embodiments described above with reference to figures 1 to 7, the sensing portion 5' of the optical sensing path has been described as that portion of the optical path included between the two locks 8. However, it has been revealed to be difficult in all these embodiments to ensure that the rest of the sensing path (that portion of the sensing path outside the two blocks 8) is not influenced by a mechanical action acting on the transducer. In practice, also the transmission of the optical and/or electrical signal through portions of the sensing path other than the sensing portion 5' is influenced and/or modified by a mechanical action acting on the transducer; in other words, in all the embodiments described above, the entire length of the sensing path may somehow affect the output of the transducer, even if the part outside the sensing portion 5' is kept loose and within a protective housing.

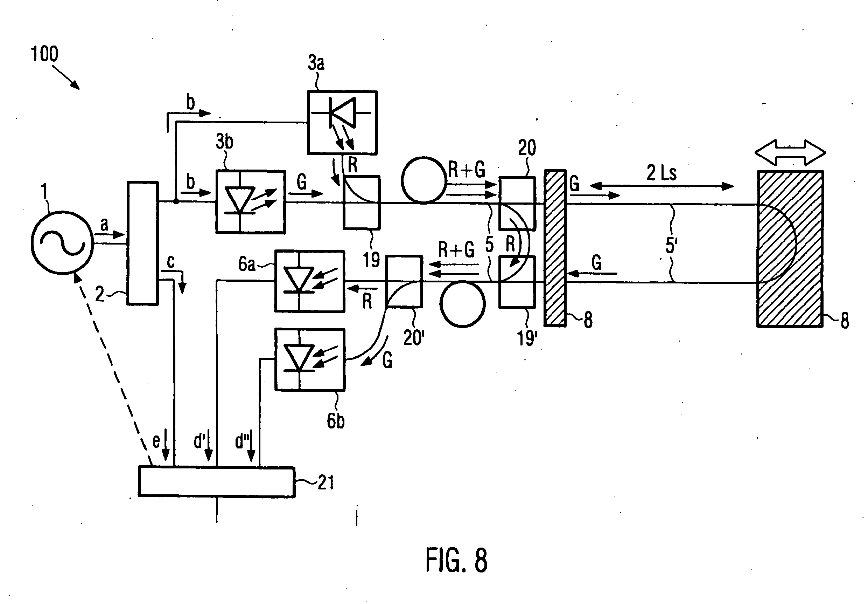

This unwanted effect can be overcome considering a two wavelength scheme as depicted in figure 8, where, as usual, like features or component parts already described with reference to previous figures are identified by like reference numerals.

As apparent from figure 8, the above mentioned two-wavelength approach has been applied to an embodiment similar to that depicted in figure 2; however, it will become apparent to those skilled in the art that the 2-wavelength approach can be applied to any of the embodiments described above, including the embodiment depicted in figure 7.

The most important difference between the embodiment of figure 8 and the embodiment of figure 2 relates to the fact that in the embodiment of figure 8, first and second optical emitting means 3a and 3b are used, as well as first and second optical receiving means 6a and 6b; moreover, a first and a second wavelength insensitive power splitter or divider 19 and 19' and first and second wavelength sensitive power splitter or divider 20 and 20' are used. Furthermore, in the embodiment of figure 8, the measuring means 21 are adapted to process the two sensing electrical signals d' and d" arising from two optical sensing signals G and R at different wavelengths. In particular, in figure 8, these two signals at different wavelengths are identified by G (green) an R (red); however, any other wavelength may be used, according to the circumstances.

In the embodiment of figure 8, the signal a generated by the generating means 1 is split by the power splitter 2 into a sensing signal b and a reference signal c. The reference signal c goes directly to the phase processing unit 21 through the reference path 4; in particular, the reference signal c is received by the phase processing unit 21 as a reference signal e. The sensing signal b is fed to first and second optical emitting means 3a and 3b, respectively, adapted to convert the signal b into a first optical signal at a predefined wavelength (the R signal) and a second sensing optical signal at a second predefined wavelength (the signal G). The red and green optical signals R and G are injected together into the sensing part 5 through a first combiner 19 (i.e. a wavelength insensitive power splitter used as a combiner); then , just before the first lock 8, a first wavelength sensitive splitter 20 drops the red signal R that is immediately recombined by another power combiner 19' with the green signal R that has been going through the sensing portion 5'. Moreover, a further wavelength sensitive splitter 20' demultiplexes the two red and green signals R and G and routes them to two optical receiving means 6a and 6b, respectively; the resulting electrical signals d' and d" exiting the optical retrieving means 6a and 6b enter then the phase processing unit 21. By comparing the phase shift variation of the electrical signals d' and d" coming form the red and green optical signals R and G, it is, therefore, possible to compensate for the unwanted deformations an measure only the displacement in the sensing region bounded by the two locks 8. In particular, if the variation in the phase shift between, on the one hand, the reference signal e and the first sensing signal d' and, on the other hand, the variation in the phase shift between the reference signal e and the second sensing signal d" are measured, an indication can be obtained of the variation in the phase shift $\delta$ arising from influences other than the mechanical action acting on the sensing portion 5' so that this mechanical action may be detected and measured accurately.

Furthermore, it is also possible to recover not only the variation in the length Ls of the sensing portion 5' but also its absolute value without the necessity of a prior calibration; in particular, this is possible by combining the 2-wavelength technique with a frequency variable generator (or a 2-frequency generator) in order to make measures both at a frequency low enough not to have ambiguities in the fiber length and a frequency high enough to obtain the desired resolution. A variation of the scheme shown in figure 8 where only single receiving means are necessary can also be implemented. In this case the two R and G signals exiting from the combiner 19' are routed directly to the receiving means 6a. Then the separation between the two wavelengths can be done in time switching on and off alternatively at an appropriate rate the two sources 3a and 3b. This way it is possible to have an output signal d' that alternatively represent the reading associated with the R and with G signals so that the compensation for the unwanted deformations or the measure of the absolute distance can be completed using the same previously described procedure.

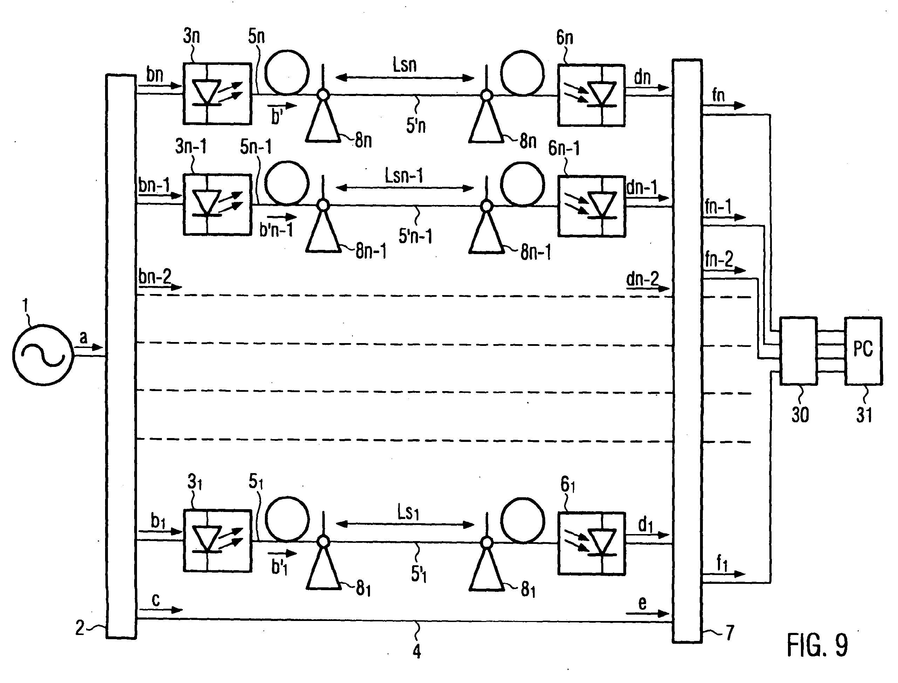

All the embodiments described above with reference to figures 1 to 8 allows to detect and/o measure mechanical actions acting on the transducer; accordingly, if a plurality of transducers is provided, a measuring device can be obtained allowing to detect a plurality of mechanical actions, displacements, stresses or the like simultaneously. An example of such a measuring device will be described in the following with reference to figure 9, wherein, again, like features and/or component parts already described with reference to previous figures are identified by like reference numerals.

In the embodiment of figure 9, a plurality of optical sensing paths as described above with reference to figure 1 is used; however, it will be appreciated by those skilled in the art that the solution depicted in figure 9 may be realized also implementing one of the optical paths described above with reference to any of the figures 2 to 8.

As apparent from figure 9, the electrical signal a generated by the generating means 1 is split by the power divided 2 into a plurality of electrical signals $b_1$-$b_n$ and into a unique reference signal c. The reference signal c enters the reference path 4 at the end of which the reference signal c is collected by the measuring means 7 as a reference electrical signal e. The sensing electrical signals $b_1$ to $b_n$ are converted by the optical emitting means $3_1$ to $3_n$ into a corresponding plurality of sensing optical signals $b'_1$ to $b'_n$ which, in turn, enters a plurality of sensing portions $5'_1$ to $5'_n$. Once having gone through the sensing portions $5'_1$ to $5'_n$, and after having been eventually modified by mechanical actions acting on said sensing portions, the optical signals $b'_1$ to $b'_n$ are converted into corresponding electrical sensing signals $d_1$ to $d_n$ by a corresponding plurality of optical receiving means $6_1$ to $6_n$. The sensing signals $d_1$ to $d_n$ and the reference signal e are collected by the measuring means 7 (for instance comprising a plurality of mixers and low-pass filters as depicted in figure 3) so that a plurality of output signals $f_1$ to $f_n$ are emitted. Said signals are, therefore, collected by an acquisition board 30 and sent to a computing unit 31 such as, for instance, a personal computer.

The measuring device depicted in figure 9 has been revealed to be particularly advantageous when used for the detection of mechanical actions acting on different regions of, for instance, a building or the like. In fact, with the measuring device of figure 9, each of the sensing paths $5_1$ to $5_n$ can be provided in correspondence of each critical region to be detected, thus allowing to detect and/or appreciate the mechanical actions acting on a plurality of separated regions.

Summarizing, it arises from the above disclosure that the optical transducers and the measuring devices according to the present invention allow to overcome or at least to minimize the drawbacks affecting the transducers known in the art; in particular, the optical transducers and the measuring devices according to the present invention allow to reliably detect mechanical actions such as, for instance, tractions and/or compressions, as well as stresses, displacements, shocks or the like. Moreover, the optical transducers and the measuring devices according to the present invention allow to detect both mechanical actions, stresses, displacements or the like acting on or arising in a single region and multiple mechanical actions, stresses, displacements or the like, acting on or arising in corresponding multiple regions.

The optical transducers and the measuring devices according to the present invention can be applied to the inspections of damage to structures, and especially to composite structures. They can be applied, for example, to the checking of constructive work and to the measurement of strains. The checking of damages to and/or displacements in structures can be done by inserting one or more of the optical transducers according to the present invention into the structure to be checked, for instance by fixing the sensing optical paths to the regions to be inspected while leaving the reference path unexposed to any mechanical actions. In particular, the optical transducers according to the present invention has been revealed to be useful for the measurement of the evolution of the formations of the iron beams used to improve the structural stability of walls (especially in ancient buildings or after earthquakes). Measurement of the evolution of landslides is also possible, for instance by fixing the transducer between poles in the ground. Furthermore, the optical transducers according to the present invention allow the measurement of the deformation in composite materials by incorporating the sensing optical path into the structure. In the same way, measurement of distances and displacements in hostile environments (highly flammable, explosive or electro-magnetically noisy environments) are also possible, as well as measurement of forces in bioengineering.

Useful implementations of the optical transducers according to the present invention can be obtained by connecting the transducers to a PC equipped with a digitizing card (DAQ) through a low noise multiple channel amplifier; of course, the PC can control several transducers simultaneously, so that it is possible to devise complex yet quite inexpensive networks of sensors. Moreover, using suitable software, it is also possible to control the sensors via web using standard protocols such as TCP/IP.

The optical transducers according to the present invention are characterized by quite extended operation range (from $10\mu$m up to several centimeters) while keeping a good resolution. Moreover, no interruption of the optical path (of the optical fiber) is necessary, thus resulting in a better isolation from dust, rain or the like, making these transducers particularly suitable for outdoor applications.

The transducers according to the present invention have been tested using standard commercial POF having the objective to keep the costs as low as possible. Then, considering the modulation bandwidth of the typically available LEDs, a frequency $f_1$ was used, corresponding to 20 MHz, with $f_2 = f_1 + 1$ kHz, as well as commercial signal generators. However, other solutions based on DDS chips and microcontrollers may also be implemented.

It has finally to be noted that, in the optical transducers according to the present invention, both glass or polymer optical fibers may be implemented, depending on the circumstances. In particular, if the resolution requirements are in the order of millimeters and the operation temperature allows it, polymer optical fibers can be used for the sensing path. This implies very low costs in terms of sources, detectors and connectors, besides the advantages common to all the types of optical fiber sensors such as light weight, minimal invasiveness, immunity to electromagnetic interferences and impossibility to start a fire or an explosion. The latter two properties are particularly interesting because they allow the transducers to be used in critical environments such as in electromagnetically noisy industrial premises, in storage areas of high flammable materials, in structures exposed to electrostatic discharges during thunderstorms and in the monitoring of monuments or art pieces in general. The absence of electrical currents flowing through the transducer makes this transducer also ideal for biomedical applications avoid a risk of electrocution. Moreover, thanks to their higher deformability polymer optical fibers allows longer displacements to be measured with respect to setups based on commercial silicate fibers.

It has also to be noted that the principle of working of the optical transducer according to the present invention is based on the relative phase shift of electrical signals and not on the interference of optical signals.

While the present invention has been described with reference to particular embodiments, it has to be understood that the present invention is not limited to the particular embodiment described but rather that various amendments may be introduced into the embodiments described without departing from the scope of the present invention, which is defined by the appended claims.

**Claims**

1. An optical transducer for detecting external mechanical actions acting on said transducer, said transducer comprising at least one sensing optical path (5) adapted to transmit at least one sensing periodic optical signal (b'), said at least one sensing optical path (5) comprising optical emitting means (3) adapted to receive at least one input sensing periodic electrical signal (b) and to convert said at least one input sensing periodic electrical signal (b) into said at least one sensing periodic optical signal (b') along with optical receiving means (6) adapted to receive said at least one sensing periodic optical signal (b') and to convert said at least one optical signal (b') into said at least one sensing periodic electrical signal (d);

at least one reference path (4) adapted to receive a periodic electrical signal (c) and to emit at least one periodic output electrical reference signal (e);

said optical transducer being

**characterized in that**

said transducer comprises generating means (1) adapted to generate a first periodic electrical signal (a) of a predefined frequency, along with dividing means (2) adapted to divide said first periodic electrical signal (a) into said input sensing periodic electrical signal (b) and said periodic electrical signal (c) entering said optical emitting means (3) and said reference path (4), respectively, so that said periodic electrical signals (b) and (c) have the same frequency; **in that**

said sensing optical path (5) comprises two rectilinear portions disposed parallel one to each other and joined by a curved portion,

at least one portion (5') of each of said rectilinear portions of said at least one optical path (5) comprising an optical fiber adapted to be exposed to external mechanical actions, resulting in the length Ls of said optical fibers and the transmission of said sensing periodic optical signal (b') through said sensing optical path to be modified, resulting in a phase shift between said sensing periodic electrical signal (d) and said reference periodic electrical signal (e) being generated; and **in that**

said at least one reference path (4) comprises phase shifting means (11) which maintain the phase shift between said at least one output periodic sensing electrical signal (d) and said at least one output periodic reference electrical signal (e) at a constant value in absence of any mechanical action exerted on said optical fiber.

2.  An optical transducer as claimed in claim 1,
    **characterized in that**
    said shifting means are set so as to maintain the phase shift between said at least one sensing periodic electrical signal (d) and said at least one periodic electrical reference signal (e) at a constant value corresponding to approximately 90 deg.

3.  An optical transducer as claimed in one of claims 1 and 2,
    **characterized in that**
    said optical receiving means (6) comprise a photo diode.

4.  An optical transducer as claimed in one of claims 1 and 2,
    **characterized in that**
    said optical receiving means (6) comprise a photo transistor or the like.

5.  An optical transducer as claimed in one of claims 1 to 4,
    **characterized in that**
    said optical emitting means (3) comprise a LED.

6.  An optical transducer as claimed in one of claims 1 to 4,
    **characterized in that**
    said optical emitting means comprise a laser diode.

7.  An optical transducer as claimed in one of claims 1 to 6,
    **characterized in that**
    said optical fibers are Polymer Optical Fibers POF.

8.  An optical transducer as claimed in one of claims 1 to 7,
    **characterized in that**
    said at least one reference path (4) comprises a copper wire.

9.  An optical transducer as claimed in one of claims 1 to 8,
    **characterized in that**
    said at least one reference path (4) comprises a coaxial cable.

10. An optical transducer as claimed in one of claims 1 to 9,
    **characterized in that**
    said at least one reference path (4) comprises a reference optical path adapted to transmit at least one reference periodic optical signal and optical receiving means adapted to receive said at least one periodic optical reference signal and to convert said at least one periodic optical reference signal into said at least one reference periodic electrical signal (e).

11. An optical transducer as claimed in claim 10,
**characterized in that**
said at least one reference path comprises optical emitting means adapted to receive at least one electrical periodic reference signal (c) and to convert said at least one electrical periodic reference signal (c) into said at least one reference periodic optical signal.

12. An optical transducer as claimed in one of claims 10 and 11,
**characterized in that**
said reference optical path comprises an optical fiber.

13. An optical transducer as claimed in one of claims 1 to 12,
**characterized in that**
said optical transducer comprises a plurality of sensing optical paths (51 - 5n) each adapted to transmit at least one corresponding sensing periodic optical signal (b'1- b'n) and to emit at least one corresponding sensing output periodic electrical signal (d1- dn) and each comprising at least two rectilinear portions disposed parallel to one another and joined by a curved portion and adapted to be exposed to external mechanical actions, and **in that** said optical transducer comprises one reference path (4) adapted to emit at least one periodic electrical signal (e).

14. A measuring device for measuring and/or detecting mechanical actions;
**characterized in that**
it comprises at least one optical transducer as claimed in one of claims 1 to 13 and measuring means (7) adapted to measure the phase shift between said at least one sensing periodic electrical signal (d) and said at least one reference periodic electrical signal (e).

15. A measuring device as claimed in claim 14,
**characterized in that**
said measuring means (7) are adapted to collect said at least one output periodic electrical reference signal (e) and said at least one output periodic sensing electrical signal (d) and to emit an output periodic electrical signal (f) so that the phase shift between said at least one output reference electrical signal (e) and said at least one output sensing electrical signal (d) can be measured as a function of the amplitude of said output electrical signal (f).

16. A measuring device as claimed in one of claims 14 to 15,
**characterized in that**
it comprises first measuring means (7') and second measuring means (7"), said first measuring means being adapted to collect said at least one sensing periodic electrical signal (d) and said at least one reference periodic electrical signal (e) and to emit a first output periodic electrical signal (f), said second measuring means (7") being adapted to collect said at least one output sensing periodic electrical signal (d) and a reference periodic electrical signal (h) shifted in phase of 90 deg. with respect to said reference periodic electrical signal (e) and to emit a second output periodic electrical signal (l) so that the phase shift between said at least one reference periodic electrical signal (e) and said at least one sensing periodic electrical signal (d) can be measured as a function of the amplitude of one or both of said output periodic electrical signals (f) and (l).

**Patentansprüche**

1. Optischer Wandler zum Erfassen äußerer mechanischer Einwirkungen, die auf den Wandler wirken, wobei der Wandler umfasst:

wenigstens einen optischen Erfassungsweg (5), der zum Senden wenigstens eines periodischen optischen Erfassungssignals (b') eingerichtet ist, wobei der wenigstens eine optische Erfassungsweg (5) eine optische Emissionseinrichtung (3, die zum Empfangen wenigstens eines periodischen elektrischen Eingangs-Erfassungssignals (b) und zum Umwandeln des wenigstens einen periodischen elektrischen Eingangs-Erfassungssignals (b) in das wenigstens eine periodische optische Erfassungssignal (b') eingerichtet ist, zusammen mit einer optischen Empfangseinrichtung (6) umfasst, die zum Empfangen des wenigstens einen periodischen optischen Erfassungssignals (b') und zum Umwandeln des wenigstens einen optischen Signals (b') in das wenigstens eine periodische elektrische Erfassungssignal (d) eingerichtet ist;

wenigstens einen Bezugsweg (4), der zum Empfangen eines periodischen elektrischen Signals (c) und zum Emittieren wenigstens eines periodischen elektrischen Ausgangs-Bezugssignals (e) eingerichtet ist;

wobei der optische Wandler **dadurch gekennzeichnet ist, dass** der Wandler eine Erzeugungseinrichtung (1), die zum Erzeugen eines ersten periodischen elektrischen Signals (a) einer vordefinierten Frequenz eingerichtet ist, zusammen mit einer Teileinrichtung (2) umfasst, die zum Teilen des ersten periodischen elektrischen Signals (a) in das periodische elektrische Eingangs-Erfassungssignal (b) und das periodische elektrische Signal (c) eingerichtet ist, die in die optische Emissionseinrichtung (3) bzw. den Bezugsweg (4) eintreten, so dass die periodischen elektrischen Signale (b) und (c) die gleiche Frequenz haben; **dadurch** dass der optische Erfassungsweg (5) zwei geradlinige Abschnitte umfasst, die parallel zueinander angeordnet sind und durch einen gekrümmten Abschnitt verbunden sind,

wenigstens ein Abschnitt (5') jedes der geradlinigen Abschnitte des wenigstens einen optischen Weges (5) eine Lichtleitfaser umfasst, die so eingerichtet ist, dass sie äußeren mechanischen Einwirkungen ausgesetzt ist, durch die die Länge Ls der Lichtleitfasern und die Übertragung des periodischen optischen Erfassungssignals (b') über den optischen Erfassungsweg modifiziert werden und **dadurch** eine Phasenverschiebung zwischen dem periodischen elektrischen Erfassungssignal (d) und dem periodischen elektrischen Bezugssignal (e) erzeugt wird, und **dadurch**, dass

der wenigstens eine Bezugsweg (4) eine Phasenverschiebungseinrichtung (11) umfasst, die die Phasenverschiebung zwischen dem wenigstens einen periodischen elektrischen Erfassungssignal (d) und dem wenigstens einen periodischen elektrischen Ausgangs-Bezugssignal (e) beim Nichtvorhandensein auf die Lichtleitfaser ausgeübter mechanischer Einwirkung auf einem konstanten Wert hält.

2. Optischer Wandler nach Anspruch 1,
   **dadurch gekennzeichnet, dass**
   die Verschiebungseinrichtung so eingestellt ist, dass sie die Phasenverschiebung zwischen dem wenigstens einen periodischen elektrischen Erfassungssignal (d) und dem wenigstens einen periodischen elektrischen Bezugssignal (e) auf einem konstanten Wert hält, der ungefähr 90 Grad entspricht.

3. Optischer Wandler nach einem der Ansprüche 1 und 2,
   **dadurch gekennzeichnet, dass**
   die optische Empfangseinrichtung (6) eine Fotodiode umfasst.

4. Optischer Wandler nach einem der Ansprüche 1 und 2,
   **dadurch gekennzeichnet, dass**
   die optische Empfangseinrichtung (6) einen Fototransistor oder dergleichen umfasst.

5. Optischer Wandler nach einem der Ansprüche 1 bis 4,
   **dadurch gekennzeichnet, dass**
   die optische Empfangseinrichtung (3) eine Leuchtdiode umfasst.

6. Optischer Wandler nach einem der Ansprüche 1 bis 4,
   **dadurch gekennzeichnet, dass**
   die optische Emissionseinrichtung eine Laserdiode umfasst.

7. Optischer Wandler nach einem der Ansprüche 1 bis 6,
   **dadurch gekennzeichnet, dass**
   die Lichtleitfasern Polymer-Lichtleitfasern (POF) sind.

8. Optischer Wandler nach einem der Ansprüche 1 bis 7,
   **dadurch gekennzeichnet, dass**
   der wenigstens eine Bezugsweg (4) einen Kupferdraht umfasst.

9. Optischer Wandler nach einem der Ansprüche 1 bis 8,
   **dadurch gekennzeichnet, dass**
   der wenigstens eine Bezugsweg (4) ein Koaxialkabel umfasst.

10. Optischer Wandler nach einem der Ansprüche 1 bis 9,
    **dadurch gekennzeichnet, dass**

der wenigstens eine Bezugsweg (4) einen optischen Bezugsweg, der zum Übertragen wenigstens eines periodischen optischen Bezugssignals eingerichtet ist, und eine optische Empfangseinrichtung umfasst, die zum Empfangen des wenigstens einen periodischen optischen Bezugssignals sowie zum Umwandeln des wenigstens einen periodischen optischen Bezugssignals in das wenigstens eine periodische elektrische Bezugssignal (e) eingerichtet ist.

11. Optischer Wandler nach Anspruch 10,
**dadurch gekennzeichnet, dass**
der wenigstens eine Bezugsweg eine optische Emissionseinrichtung umfasst, die zum Empfangen wenigstens eines elektrischen periodischen Bezugssignals (10) und zum Umwandeln des wenigstens einen elektrischen periodischen Bezugssignals (10) in das wenigstens eine periodische optische Bezugssignal eingerichtet ist.

12. Optischer Wandler nach einem der Ansprüche 10 und 11,
**dadurch gekennzeichnet, dass**
der optische Bezugsweg eine Lichtleitfaser umfasst.

13. Optischer Wandler nach einem der Ansprüche 1 bis 12,
**dadurch gekennzeichnet, dass**
der optische Wandler eine Vielzahl optischer Erfassungswege (51-5n) umfasst, die jeweils zum Übertragen wenigstens eines entsprechenden periodischen optischen Erfassungssignals (b'1-b'n) und zum Emittieren wenigstens eines entsprechenden periodischen elektrischen Ausgangs-Erfassungssignals (d1-dn) eingerichtet sind und jeweils wenigstens zwei geradlinige Abschnitte umfassen, die parallel zueinander angeordnet sind und durch einen gekrümmten Abschnitt miteinander verbunden sind und so eingerichtet sind, dass sie äußeren mechanischen Einwirkungen ausgesetzt sind, und **dadurch**, dass der optische Wandler einen Bezugsweg (4) umfasst, der zum Emittieren wenigstens eines periodischen elektrischen Signals (e) eingerichtet ist.

14. Messvorrichtung zum Messen und/oder Erfassen mechanischer Einwirkungen;
**dadurch gekennzeichnet, dass**
sie wenigstens einen optischen Wandler nach einem der Ansprüche 1 bis 13 und eine Messeinrichtung (7) umfasst, die zum Messen der Phasenverschiebung zwischen dem wenigstens einen periodischen elektrischen Erfassungssignal (d) und dem wenigstens einen periodischen elektrischen Bezugssignal (e) eingerichtet ist.

15. Messvorrichtung nach Anspruch 14;
**dadurch gekennzeichnet, dass**
die Messeinrichtung (7) zum Aufnehmen des wenigstens einen periodischen elektrischen Ausgangs-Bezugssignals (e) und des wenigstens einen periodischen elektrischen Ausgangs-Erfassungssignals (d) sowie zum Emittieren eines periodischen elektrischen Ausgangssignals (f) eingerichtet ist, so dass die Phasenverschiebung zwischen dem wenigstens einen elektrischen Ausgangs-Bezugssignal (e) und dem wenigstens einen elektrischen Ausgangs-Erfassungssignal (d) als eine Funktion der Amplitude des elektrischen Ausgangssignals (f) gemessen werden kann.

16. Messvorrichtung nach einem der Ansprüche 14 bis 15;
**dadurch gekennzeichnet, dass**
sie eine erste Messeinrichtung (7') und eine zweite Messeinrichtung (7") umfasst, wobei die erste Messeinrichtung zum Aufnehmen des wenigstens einen periodischen elektrischen Erfassungssignals (d) und des wenigstens einen periodischen elektrischen Bezugssignals (e) sowie zum Emittieren eines ersten periodischen elektrischen Ausgangssignals (f) eingerichtet ist, die zweite Messeinrichtung (7") zum Aufnehmen des wenigstens einen periodischen elektrischen Ausgangs-Erfassungssignals (d) und eines periodischen elektrischen Bezugssignals (h), das in Bezug auf das periodische elektrische Bezugssignal (e) um 90 Grad phasenverschoben ist, sowie zum Emittieren eines zweiten periodischen elektrischen Ausgangssignals (l) eingerichtet ist, so dass die Phasenverschiebung zwischen dem wenigstens einen periodischen elektrischen Bezugssignal (e) und dem wenigstens einen periodischen elektrischen Erfassungssignal (d) als eine Funktion der Amplitude eines oder beider der periodischen elektrischen Ausgangssignale (f) und (l) gemessen werden kann.

**Revendications**

1. Capteur optique permettant de détecter les actions mécaniques extérieures agissant sur ledit capteur, ledit capteur comprenant :

au moins un chemin optique de détection (5) conçu pour transmettre au moins un signal optique périodique de détection (b'), le ou les chemins optiques de détection (5) comprenant un moyen d'émission optique (3) conçu pour recevoir au moins un signal d'entrée électrique périodique de détection (b) et convertir ledit ou lesdits signaux d'entrée électriques périodiques de détection (b) en un ou des signaux optiques périodiques de détection (b') ainsi qu'un moyen de réception optique (6) conçu pour recevoir le ou les signaux optiques périodiques de détection (b') et convertir le ou les signaux optiques (b') en un ou des signaux électriques périodiques de détection (d) ;

au moins un chemin de référence (4) conçu pour recevoir un signal électrique périodique (c) et pour émettre au moins un signal de sortie électrique périodique de référence (e) ;

ledit capteur optique étant **caractérisé en ce que**

ledit capteur comprend un moyen de génération (1) conçu pour générer un premier signal électrique périodique (a) d'une fréquence prédéfinie, ainsi qu'un moyen de division (2) conçu pour diviser ledit premier signal électrique périodique (a) en un signal d'entrée électrique périodique de détection (b) et en un signal électrique périodique (c) entrant dans ledit moyen d'émission optique (3) et ledit chemin de référence (4), respectivement, de manière à ce que lesdits signaux électriques périodiques (b) et (c) aient la même fréquence ;

**en ce que** ledit chemin optique de détection (5) comprend deux parties rectilignes disposées en parallèle l'une par rapport à l'autre et jointes par une partie incurvée, au moins une partie (5') de chacune desdites parties rectilignes dudit ou desdits chemins optiques (5) comprenant une fibre optique conçue pour être exposée à des actions mécaniques extérieures, ce qui a pour résultat la modification de la longueur Ls desdits fibres optiques et de la transmission dudit signal optique périodique de détection (b') au moyen dudit chemin optique de détection, ce qui a, à son tour, pour résultat la génération d'un déphasage entre ledit signal électrique périodique de détection (d) et ledit signal électrique périodique de référence (e) ;

et **en ce que** ledit ou lesdits chemins de référence (4) comprennent un moyen de déphasage (11) qui maintient le déphasage entre ledit ou lesdits signaux de sortie électriques périodiques de détection (d) et ledit ou lesdits signaux de sortie électriques périodiques de référence (e) à une valeur constante en l'absence de toute action mécanique exercée sur ladite fibre optique.

2. Capteur optique selon la revendication 1, **caractérisé en ce que** ledit moyen de déphasage est réglé de manière à maintenir le déphasage entre ledit ou lesdits signaux électriques périodiques de détection (d) et ledit ou lesdits signaux électriques périodiques de référence (e) à une valeur constante correspondant à approximativement 90 degrés.

3. Capteur optique selon l'une quelconque des revendications 1 et 2, **caractérisé en ce que** ledit moyen de réception optique (6) comprend une photodiode.

4. Capteur optique selon l'une quelconque des revendications 1 et 2, **caractérisé en ce que** ledit moyen de réception optique (6) comprend un phototransistor ou similaire.

5. Capteur optique selon l'une quelconque des revendications 1 à 4, **caractérisé en ce que** ledit moyen d'émission optique (3) comprend une diode électroluminescente.

6. Capteur optique selon l'une quelconque des revendications 1 à 4, **caractérisé en ce que** ledit moyen d'émission optique comprend une diode laser.

7. Capteur optique selon l'une quelconque des revendications 1 à 6, **caractérisé en ce que** lesdites fibres optiques sont des fibres optiques polymères POF.

8. Capteur optique selon l'une quelconque des revendications 1 à 7, **caractérisé en ce que** ledit ou lesdits chemins de référence (4) comprennent un fil de cuivre.

9. Capteur optique selon l'une quelconque des revendications 1 à 8, **caractérisé en ce que** ledit ou lesdits chemins de référence (4) comprennent un câble coaxial.

10. Capteur optique selon l'une quelconque des revendications 1 à 9, **caractérisé en ce que** ledit ou lesdits chemins de référence (4) comprennent un chemin optique de référence conçu pour transmettre au moins un signal optique périodique de référence et un moyen de réception optique conçu pour recevoir ledit ou lesdits signaux optiques périodiques de référence et convertir ledit ou lesdits signaux optiques périodiques de référence en un ou des signaux électriques périodiques de référence (e).

**11.** Capteur optique selon la revendication 10, **caractérisé en ce que** ledit ou lesdits chemins de référence comprennent un moyen d'émission optique conçu pour recevoir au moins un signal électrique périodique de référence (c) et convertir ledit ou lesdits signaux électriques périodiques de référence (c) en un ou des signaux optiques périodiques de référence.

**12.** Capteur optique selon l'une quelconque des revendications 10 et 11, **caractérisé en ce que** ledit chemin optique de référence comprend une fibre optique.

**13.** Capteur optique selon l'une quelconque des revendications 1 à 12, **caractérisé en ce que** ledit capteur optique comprend une pluralité de chemins optiques de détection (51 - 5n) chacun étant conçu pour transmettre au moins un signal optique périodique de détection (b'1 - b'n) correspondant et émettre au moins un signal de sortie électrique périodique de détection (d1 - dn) correspondant et chacun comprenant au moins deux parties rectilignes disposées en parallèle l'une par rapport à l'autre et jointes par une partie incurvée et conçues pour être exposées à des actions mécaniques extérieures, et **en ce que** ledit capteur optique comprend un chemin de référence (4) conçu pour émettre au moins un signal électrique périodique (e).

**14.** Dispositif de mesure permettant de mesurer et/ou de détecter des actions mécaniques, **caractérisé en ce qu'**il comprend au moins un capteur optique selon l'une quelconque des revendications 1 à 13 et un moyen de mesure (7) conçu pour mesurer le déphasage entre ledit ou lesdits signaux électriques périodiques de détection (d) et ledit ou lesdits signaux électriques périodiques de référence (e).

**15.** Dispositif de mesure selon la revendication 14, **caractérisé en ce que** ledit moyen de mesure (7) est conçu pour collecter ledit ou lesdits signaux de sortie électriques périodiques de référence (e) et ledit ou lesdits signaux de sortie électriques périodiques de détection (d) et émettre un signal de sortie électrique périodique (f) de manière à ce que le déphasage entre ledit ou lesdits signaux de sortie électriques de référence (e) et ledit ou lesdits signaux de sortie électriques de détection (d) puisse être mesuré en fonction de l'amplitude dudit signal de sortie électrique (f).

**16.** Dispositif de mesure selon l'une quelconque des revendications 14 à 15, **caractérisé en ce qu'**il comprend un premier moyen de mesure (7') et un second moyen de mesure (7"), ledit premier moyen de mesure étant conçu pour collecter ledit ou lesdits signaux électriques périodiques de détection (d) et ledit ou lesdits signaux électriques périodiques de référence (e) et émettre un premier signal de sortie électrique périodique (f), ledit second moyen de mesure (7") étant conçu pour collecter ledit ou lesdits signaux de sortie électriques périodiques de détection (d) et un signal électrique périodique de référence (h) déphasé de 90 degrés par rapport audit signal électrique périodique de référence (e) et émettre un second signal de sortie électrique périodique (1) de manière à ce que le déphasage entre ledit ou lesdits signaux électriques périodiques de référence (e) et ledit ou lesdits signaux électriques périodiques de détection (d) puisse être mesuré en fonction de l'amplitude dudit signal de sortie électrique périodique (f) et/ou dudit signal de sortie électrique périodique (1).

EP 1 847 811 B1

100

3 5

1

b

a 2 c

Ls

5'

8 8

6

d

7

e f

4

**FIG. 1**

100

3

1

b

a 2 c

b'

5

8

2 Ls

5'

8

d

6

4 e

7

f

**FIG. 2**

FIG. 3

FIG. 4

FIG. 5

FIG. 6

EP 1 847 811 B1

FIG. 7

EP 1 847 811 B1

FIG. 8

FIG. 9

EP 1 847 811 B1

**EP 1 847 811 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6236488 B
- EP 1152259 A
- EP 1274680 A